# EUROPEAN PATENT SPECIFICATION

(11) **EP 3 722 111 B1**
(45) Date of publication and mention of the grant of the patent: **06.09.2023**
(21) Application number: 18885212.3
(22) Date of filing: 03.12.2018
(51) Int. Cl.: B60C 13/00, B60C 11/13

(54) **TIRE**
REIFEN
PNEU

(30) Priority: 07.12.2017 JP 2017235509
(43) Date of publication of application: 14.10.2020
(73) Proprietor: Bridgestone Corporation, Tokyo 104-8340 (JP)
(72) Inventor: IWABUCHI, Sotaro, Tokyo 104-8340 (JP)
(74) Representative: Marks & Clerk LLP
(86) International application number: PCT/JP2018/044417
(87) International publication number: WO 2019/111856

(56) References cited:
- WO-A1-2017/002507
- FR-A1- 3 023 508
- JP-A- H10 297 222
- JP-A- H11 321 243
- JP-A- 2016 084 041
- JP-A- 2016 215 693
- JP-A- 2016 215 702
- JP-A- 2016 215 705
- JP-A- 2017 081 306

## Description

### Technical Field

The present invention relates to a tire on whose outer surface are formed minute projections.

### Background Art

Conventionally, minute projections are formed on side portions of a tire so that pattern regions having contrasting patterns are formed. For example, technology is disclosed in PCT International Publication No. 2012/131089 in which highly contrasting patterns are formed on side portions of a tire by means of a plurality of projections that are formed extending over an entire pattern region. Attention is also drawn to the disclosures of JP2016 215705, FR 3 023 508 and JP 2017 081306.

### SUMMARY OF THE INVENTION

### Technical Problem

Decorative trim portions on side portions of a tire have a region at which projections are formed. By controlling the light reflection by means of these projections, the brightness of this region is lower compared to the brightness of other regions where light is reflected unmodified. However, variation for showing decorative trim portions is limited if the one region where the projections are formed has the same low brightness over the entirety thereof.

It is an object of the present invention to broaden the variation of decorative trim portions that have a region where projections are formed.

### Solution to the Problem

A tire according to a first aspect includes decorative trim portions that are formed on an outer surface of a tire and that have a base surface, a first pattern region in which are formed plural first projections, the first projections protruding at a protrusion height that is a predetermined value of from 0.1 mm to 1.0 mm from the base surface of the decorative trim portion, and at a pitch between each of the first projections being a predetermined value of from 0.1 mm to 1.0 mm, and a second pattern region in which are formed plural second projections, the second projections protruding at a protrusion height that is a predetermined value of from 0.1 mm to 1.0 mm from the base surface of the decorative trim portion, and a pitch between each of the second projections being a predetermined value of from 0.1 mm to 1.0 mm, wherein the pitch between each of the first projections and the pitch between each of the second projections are the same, while the protrusion height of the first projections and the protrusion height of the second projections are different from each other.

According to the above-described structure, plural first projections and plural second projections are formed at predetermined pitches at a decorative trim portion in a first pattern region, and in a second pattern region which is adjacent to the first pattern region. Light irradiated onto the first pattern region is attenuated by being repeatedly reflected by mutually facing side surfaces of the first projections, and is reflected towards the outside. In addition, light irradiated onto the second pattern region is attenuated by being repeatedly reflected by mutually facing side surfaces of the second projections, and is also reflected towards the outside. As a result, the brightness of the first pattern region and the brightness of the second pattern region are lower compared to other regions where projections are not formed, so that these regions appear relatively black.

Here, the height of the plural first projections that are formed at predetermined pitches in the first pattern region is different from the height of the plural second projections that are formed at predetermined pitches in the second pattern region. Because of this, within the regions where the brightness is low and which appear as blacker in color, the brightness of the first pattern regions is different from the brightness of the second pattern regions. By providing the first and the second pattern regions having different levels of brightness from each other in the regions where the brightness is low and which appear as blacker in color in this way, it is possible to increase options that is used to show decorative portions that have a region where projections are formed at a tire.

A tire according to a second aspect is characterized in that, in the tire according to the first aspect, when viewed from an orthogonal direction relative to the base surface, the first projections and the second projections are formed so as to include extended portions that extend in multiple directions from a base point.

According to the above-described structure, when viewed from an orthogonal direction relative to the base surface, the first projections and the second projections are formed so as to include extended portions that extend in multiple directions from a base point. Because of this, it is possible to vary the angle of reflection of light that is reflected by side surfaces of the first projections and side surfaces of the second projections, so that any concentration of reflection light is inhibited. As a result, even if an observer views a decorative trim portion while changing the angle at which they are viewing the decorative trim portion, it is possible to inhibit the appearance thereof from changing.

The tire according to a third aspect is characterized in that, in the tire according to the second or third aspects, the protrusion height of the second projections is 70 % or less of the protrusion height of the first projections.

According to the above-described structure, the protrusion height of the second projections is 70 % or less of the protrusion height of the first projections. Because of this, there is a sizable difference between the quantity of light (i.e., the light intensity) which is irradiated onto the first pattern region and reflected towards the outside and the quantity of light (i.e., the light intensity) which is irradiated onto the second pattern region and reflected towards the outside. As a result, there is a distinct boundary line between the first pattern region and the second pattern region, and it is possible to increase the options that is used to show decorative portions that have a region where projections are formed at a tire.

The tire according to the first aspect is also characterized in that the tire further includes a third pattern region that is disposed adjacent to the second pattern region, and in which are formed plural third projections, the third projections protruding at a protrusion height that is a predetermined value of from 0.1 mm to 1.0 mm from the base surface of the decorative trim portion, and at a pitch between each of the third projections being a predetermined value of from 0.1 mm to 1.0 mm, and the pitch between each of the third projections and the pitch between each of the first projections are the same, and the protrusion height of the first projections is higher than the protrusion height of the second projections, while the protrusion height of the third projections is lower than the protrusion height of the second projections, and the first pattern region, the second pattern region, and the third pattern region are arranged in this sequence from one side to another side in one direction of the tire.

According to the above-described structure, the protrusion height of the first projections is higher than the protrusion height of the second projections, while the protrusion height of the third projections is lower than the protrusion height of the second projections. As a result, the quantity of light reflected towards the outside in the first pattern region is less in comparison to the quantity of light reflected towards the outside in the second pattern region. Additionally, the quantity of light reflected towards the outside in the second pattern region is less in comparison to the quantity of light reflected towards the outside in the third pattern region.

In this way, the brightness of each of the third pattern region, the second pattern region, and the first pattern region becomes lower in this sequence. As a result, it is possible to show phased changes in brightness (i.e., as a gradation effect).

### Advantageous Effects of the Invention

According to the present invention, it is possible to increase the options that is used to show decorative portions that have a region where projections are formed at a tire.

### BRIEF DESCRIPTION OF THE DRAWINGS

FIG. 1 is a side view of a tire according to a first exemplary embodiment of the present invention.
FIG. 2 is an expanded side view showing a decorative trim portion of the tire according to the first exemplary embodiment of the present invention.
FIG. 3 is an expanded plan view showing projections formed in a first low brightness region of the decorative trim portion of the tire according to the first exemplary embodiment of the present invention.
FIG. 4 is a plan view showing projections formed in the first low brightness region of the decorative trim portion of the tire according to the first exemplary embodiment of the present invention.
FIG. 5 is an expanded plan view showing projections formed in a second low brightness region of the decorative trim portion of the tire according to the first exemplary embodiment of the present invention.
FIG. 6 is a plan view showing projections formed in the second low brightness region of the decorative trim portion of the tire according to the first exemplary embodiment of the present invention.
FIG. 7 is an expanded plan view showing projections formed in a third low brightness region of the decorative trim portion of the tire according to the first exemplary embodiment of the present invention.
FIG. 8 is a plan view showing projections formed in the third low brightness region of the decorative trim portion of the tire according to the first exemplary embodiment of the present invention.
FIG. 9A is a cross-sectional view showing projections formed in the decorative trim portion of the tire according to the first exemplary embodiment of the present invention.
FIG. 9B is a cross-sectional view showing projections formed in the decorative trim portion of the tire according to the first exemplary embodiment of the present invention.
FIG. 9C is a cross-sectional view showing projections formed in the decorative trim portion of the tire according to the first exemplary embodiment of the present invention.
FIG. 10 is a side view of a tire according to a first example, which is not according to an embodiment of the present invention.
FIG. 11 is an expanded plan view showing projections formed in a second low brightness region of a decorative trim portion of the tire according to the first example.
FIG. 12 is a table showing evaluation results when the tire according to the tire according to the first example, and a tire according to a comparative example were evaluated.
FIG. 13 is an expanded plan view showing projections formed in a decorative trim portion of a tire according to a second exemplary embodiment of the present invention.
FIG. 14 is an expanded plan view showing projections formed in a decorative trim portion of a tire according to a third exemplary embodiment of the present invention.
FIG. 15 is a perspective view showing the tire according to the second example.

### DESCRIPTION OF THE EMBODIMENTS

### [First Exemplary Embodiment]

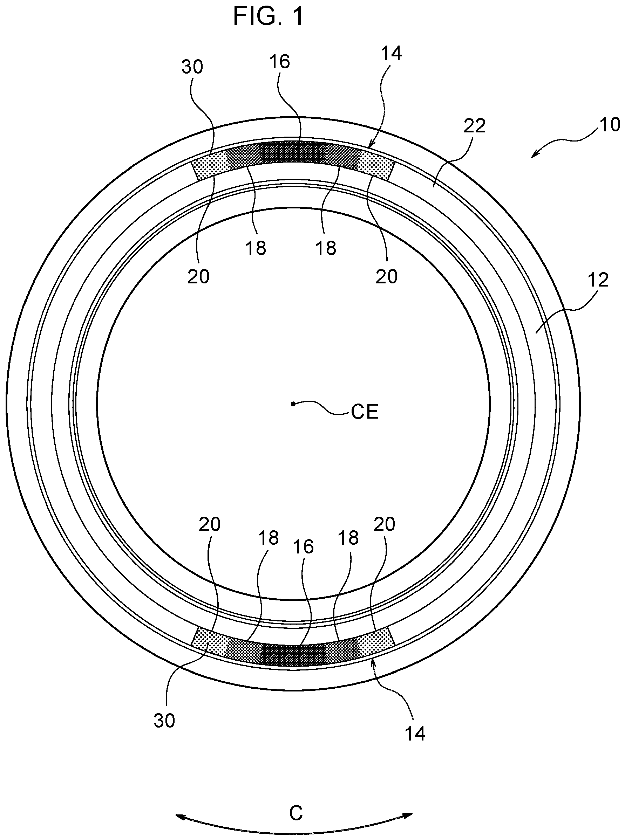

An example of a tire according to an exemplary embodiment of the present invention will now be described in accordance with FIG. 1 through FIG. 9. Note that, in the drawings, an arrow C, an arrow R, and an arrow W respectively show a tire circumferential direction, a tire radial direction, and a tire width direction.

As is shown in FIG. 1, decorative trim portions 14 are formed on a tire side portion 12 of a tire 10. When viewed from an axial direction of the tire 10, the decorative trim portions 14 are formed in a circular arc shape, and are disposed in two locations in symmetrically opposite positions on either side of a tire central axis CE. In addition, base surfaces 30 are formed on the decorative trim portions 14. These base surfaces 30 are recessed relative to other regions 22 where projections and the like are not formed, in regions of the tire side portion 12 other than the decorative trim portions 14. These base surfaces 30 form part of a bottom surface of the decorative trim portion 14 and, when viewed from the tire circumferential direction, are formed in the shape of a curved surface that protrudes towards an outer side in a width direction of the tire 10. In the present exemplary embodiment, the base surfaces 30 are recessed to a depth of 0.4 mm relative to the other regions 22.

Furthermore, first low-brightness regions 16, second low-brightness regions 18, and third low-brightness regions 20, which have a lower brightness than the other regions 22 and appear as black in color, are formed in the decorative trim portions 14. In other words, the decorative trim portions 14 are formed by the first low-brightness regions 16, the second low-brightness regions 18, and the third low-brightness regions 20. The first low-brightness regions 16 are an example of a first pattern region, the second low-brightness regions 18 are an example of a second pattern region, and the third low-brightness regions 20 are an example of a third pattern region.

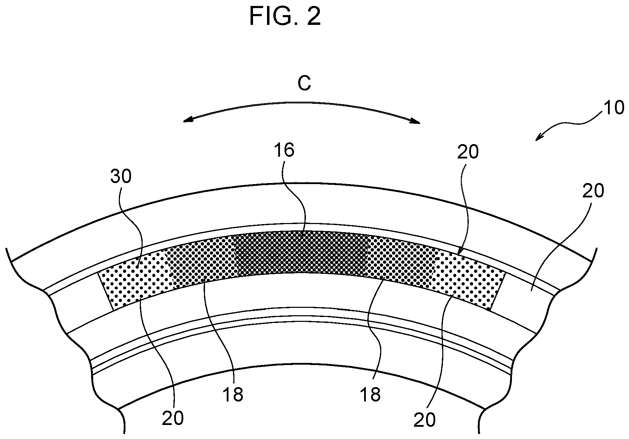

As is shown in FIG. 2, the first low-brightness regions 16 extend in the tire circumferential direction, and a second low-brightness region 18 is disposed respectively at both end sides in the tire circumferential direction of the fist low-brightness regions 16. In addition, the third low-brightness regions 20 are disposed at opposite sides from the first low-brightness regions 16 with the second low-brightness regions 18 interposed between the first low-brightness regions 16 and the third low-brightness regions 20. In this way, the first low-brightness regions 16 and the second low-brightness regions 18 are disposed adjacently to each other, while the second low-brightness regions 18 and the third low-brightness regions 20 are disposed adjacently to each other.

Note that the first low-brightness regions 16, the second low-brightness regions 18, and the third low-brightness regions 20 are formed by providing protrusions and recesses in portions of a metal mold that is used to mold the tire 10, the protrusions and recesses correspond to the first low-brightness regions 16, the second low-brightness regions 18, and the third low-brightness regions 20. Moreover, it is preferable from the standpoint of visibility when the tire 10 is fitted onto a vehicle that the first low-brightness regions 16, the second low-brightness regions 18, and the third low-brightness regions 20 be disposed on outer sides in the tire radial direction from a maximum width portion of the tire (for example, from a portion where the straight-line distance between tire side portions is the greatest).

### (First Low-Brightness Regions 16)

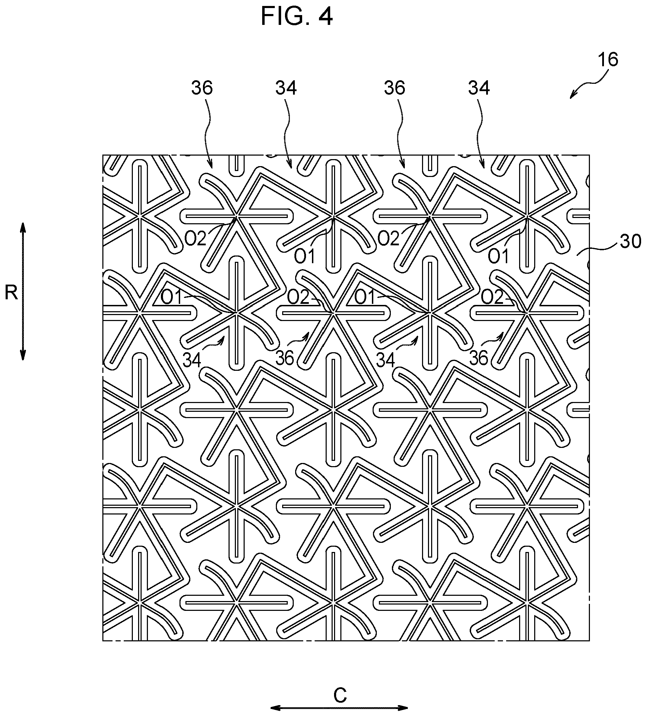

As is shown in FIG. 4, the first low-brightness regions 16 have a plurality of first asterisk projections 34 and a plurality of second asterisk projections 36 that each protrude from the base surface 30. The first asterisk projections 34 and the second asterisk projections 36 are arranged alternatingly in both the tire circumferential direction and the tire radial direction. The first asterisk projections 34 and the second asterisk projections 36 are an example of first projections.

### [First Asterisk Projections 34]

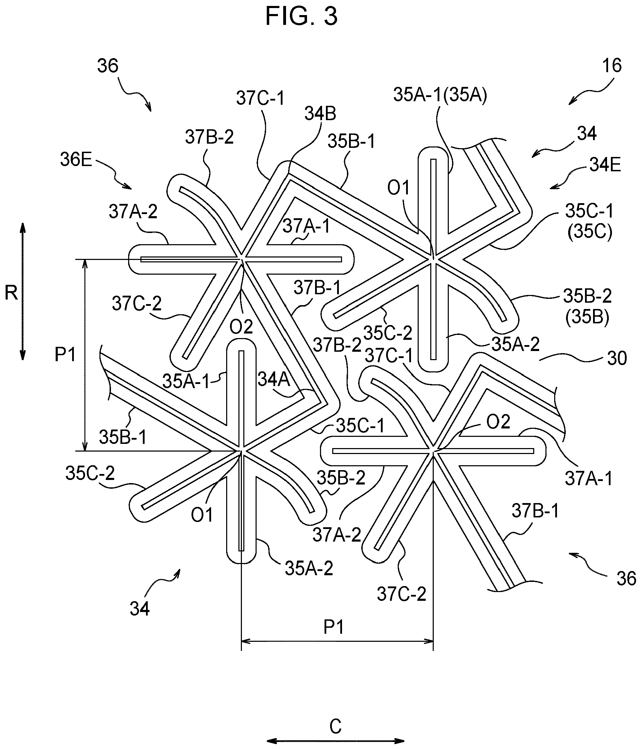

As is shown in FIG. 3, the first asterisk projections 34 are formed by first extended portions 35A-1 and 35A-2, second extended portions 35B-1 and 35B-2, and third extended portions 35C-1 and 35C-2 that, when viewed from a perpendicular direction relative to the base surface 30 (i.e., the direction of the rotation axis of the tire 10), extend in different directions from each other from a center O1 which is serving as a base point. Hereinafter, these six extended portions are grouped together under the description `extended portions 34E'. A linear shape that is bent at the center O1 is formed by one extended portion 34E and another extended portion 34E (excluding an extended portion 34E that extend in opposite directions from each other from the center O1).

The first extended portion 35A-1 and the first extended portion 35A-2 extend in opposite directions from the center O1, and a continuous straight-line shape is formed by the first extended portion 35A-1 and the first extended portion 35A-2. The first extended portion 35A-1 extends from the center O1 towards the outer side in the tire radial direction, while the first extended portion 35A-2 extends from the center O1 towards the inner side in the tire radial direction. Additionally, both the first extended portion 35A-1 and the first extended portion 35A-2 have the same length. Hereinafter, the first extended portion 35A-1 and the first extended portion 35A-2 are grouped together under the description `first extended portions 35A'.

The second extended portion 35B-1 and the second extended portion 35B-2 extend in opposite directions from the center O1, and a continuous straight-line shape is formed by the second extended portion 35B-1 and the second extended portion 35B-2. The second extended portion 35B-1 and the second extended portion 35B-2 are inclined relative to the tire circumferential direction such that an end portion thereof on one side (i.e., on the left side in the drawing) in the tire circumferential direction is closer to the outer side in the tire radial direction in comparison to an end portion thereof on another side (i.e., on the right side in the drawing) in the tire circumferential direction.

The second extended portion 35B-1 extends from the center O1 towards one side in the tire circumferential direction, while the second extended portion 35B-2 extends from the center O1 towards the other side in the tire circumferential direction. The second extended portion 35B-1 is longer than the second extended portion 35B-2. Furthermore, a portion on a distal end side of the second extended portion 35B-2 is curved towards the inner side in the tire radial direction. Hereinafter, the second extended portion 35B-1 and the second extended portion 35B-2 are grouped together under the description 'second extended portions 35B'.

The third extended portion 35C-1 and the third extended portion 35C-2 extend in opposite directions from the center O1, and a continuous straight-line shape is formed by the third extended portion 35C-1 and the third extended portion 35C-2. The third extended portion 35C-1 and the third extended portion 35C-2 are inclined relative to the tire circumferential direction such that an end portion thereof on one side (i.e., on the left side in the drawing) in the tire circumferential direction is closer to the inner side in the tire radial direction in comparison to an end portion thereof on the other side (i.e., on the right side in the drawing) in the tire circumferential direction.

The third extended portion 35C-1 extends from the center O1 towards the other side in the tire circumferential direction, while the third extended portion 35C-2 extends from the center O1 towards the one side in the tire circumferential direction. The third extended portion 35C-1 is shorter than the third extended portion 35C-2. Hereinafter, the third extended portion 35C-1 and the third extended portion 35C-2 are grouped together under the description `third extended portions 35C'.

Each of the six extended portions 34E is offset from the extended portion 34E that is adjacent thereto by an angle of 60°. The first asterisk projections 34, in other words, the six extended portions 34E are arranged so as to extend out radially from the center O1.

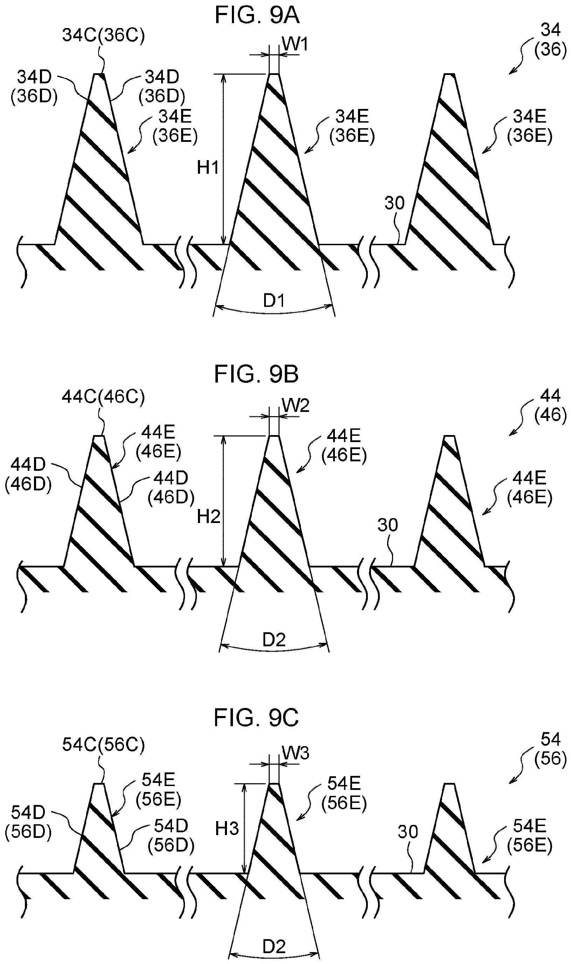

As is shown in FIG. 9 A, a cross-section in an orthogonal direction relative to the extension direction of the extended portions 34E of the first asterisk projections 34 is formed substantially in the shape of an isosceles triangle which has a flat apex surface 34C. In other words, the first asterisk projections 34 have the apex surface 34C and a pair of side surfaces 34D. In the present exemplary embodiment, a width (shown as W1 in the drawings) of the apex surface 34C is set at 0.02 mm, and an apex angle (shown as D1 in the drawings) of the first asterisk projections 34 is set at 26 °. Moreover, a height (shown as H1 in the drawings) of the first asterisk projections 34 is set at a predetermined single value of from 0.1 mm to 1.0 mm, and in the present exemplary embodiment, is set, as an example, to 0.35 mm. If the height of the projections is less than 0.1 mm, then it becomes difficult to mold the projections, and there is a concern that it will not be possible to attenuate incident light and reduce the brightness to a degree that these regions appear black in color (described below in more detail). On the other hand, by making the height of the projections not more than 1.0 mm, a difference between the rigidity of the portions forming the projections and the rigidity of portions peripheral to the projections is reduced, and it is possible to inhibit concentrations of localized stress.

Note that the dimensions of the height of the projections and the pitch between the projections (described below) in the present exemplary embodiment can be measured using, as an example, a One-Shot 3D Measuring Macroscope, VR-3000 Series instrument manufactured by Keyence Corporation.

### [Second Asterisk Projections 36]

As is shown in FIG. 3, the second asterisk projections 36 are formed having the same shape as the first asterisk projections 34. More specifically, when viewed from a perpendicular direction relative to the base surface 30, the configuration of the second asterisk projections 36 is achieved by rotating each first asterisk projection 34 by 90 ° in a clockwise direction around the center O1, and turning the first asterisk protrusion 34 that has been rotated by 90 degrees about the center O1 upside down, as viewed from the direction orthogonal to the base surface 30.

In the second asterisk projections 36, the portions thereof that correspond to the first extended portions 35A-1 and 35A-2, the second extended portions 35B-1 and 35B-2, and the third extended portions 35C-1 and 35C-2 of the first asterisk projections 34, and also to the center O1 are referred to as first extended portions 37A-1 and 37A-2, second extended portions 37B-1 and 37B-2, and third extended portions 37C-1 and 37C-2, and as a center O2. Hereinafter, these six extended portions are grouped together under the description `extended portions 36E'.

As a result, a height of the second asterisk projections 36 is set at a predetermined single value of from 0.1 mm to 1.0 mm, and in the present exemplary embodiment, is set, as an example, to 0.35 mm. In other words, the height of the first asterisk projections 34 and the height of the second asterisk projections 36 are both set to the same value of 0.35 mm.

Moreover, a portion of the second asterisk projections 36 that corresponds to the apex surface 34C of the first asterisk projections 34 is referred to as an apex surface 36C. In addition, portions of the second asterisk projections 36 that correspond to the side surfaces 34D of the first asterisk projections 34 are referred to as side surfaces 36D (see FIG. 9 (A)).

### [Additional Structure]

As is shown in FIG. 3 and FIG. 4, the first asterisk projections 34 and the second asterisk projections 36 are arranged alternatingly in both the tire circumferential direction and the tire radial direction, and fill the entire first low-brightness regions 16 (see FIG. 2).

Distal ends of each of the first extended portions 35A-1 and 35A-2 of the first asterisk projections 34 are inserted respectively between the second extended portion 37B-2 and the third extended portion 37C-1, and between the second extended portion 37B-1 and the third extended portion 37C-2 of second asterisk projections 36 that are adjacent to each other in the tire radial direction. In addition, distal ends of each of the first extended portions 37A-1 and 37A-2 of the second asterisk projections 36 are inserted respectively between the second extended portion 35B-1 and the third extended portion 35C-2, and between the second extended portion 35B-2 and the third extended portion 35C-1 of first asterisk projections 34 that are adjacent to each other in the tire circumferential direction.

Furthermore, a distal end of the third extended portion 35C-1 of the first asterisk projection 34 and a distal end of the second extended portion 37B-1 of the second asterisk projection 36 that is disposed on the outer side in the tire radial direction relative to the first asterisk projection 34 are connected. As a result, a connecting portion 34A is formed. Moreover, a distal end of the second extended portion 35B-1 of the first asterisk projection 34 and a distal end of the third extended portion 37C-1 of the second asterisk projection 36 that is disposed on the one side in the tire circumferential direction relative to the first asterisk projection 34 are connected. As a result, a connecting portion 34B is formed.

In this structure, the first asterisk projection 34 and the second asterisk projection 36 are connected together in a stepwise manner via the connecting portions 34A and 34B from the inner side towards the outer side in the tire radial direction.

Moreover, in first asterisk projections 34 and second asterisk projections 36 which are adjacent to each other in both the tire radial direction and the tire circumferential direction, the pitch (hereinafter, referred to as a pitch P1) between the center O1 and the center O2 is set at a predetermined single value of from 0.1 mm to 1.0 mm. If the pitch P1 is less than 0.1 mm, then it becomes difficult to mold the projections. Furthermore, if the pitch P1 is greater than 1.0 mm, there is a concern that it will not be possible to attenuate incident light and reduce the brightness to a degree that these regions appear black in color (described below in more detail).

Here, the first low-brightness regions 16 described in the present exemplary embodiment that appear black in color are regions where a value of a brightness L * which is measured using a spectrophotometric color difference meter (NF333), manufactured by Nippon Denshoku Industries Co., Ltd, is, as an example, less than 10. In the present exemplary embodiment, the value of the brightness L * of the first low-brightness regions 16 was found to be 4 when measured using this measurement instrument.

### (Second Low-Brightness Regions 18)

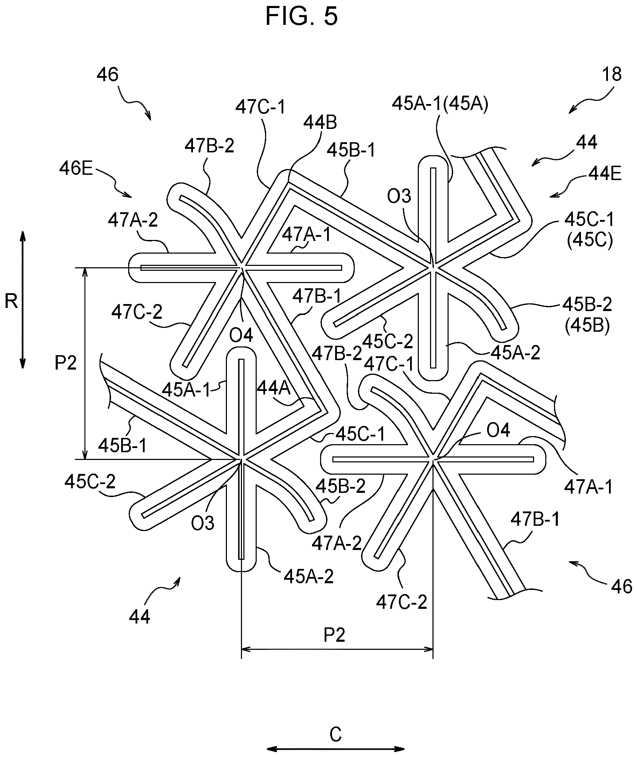

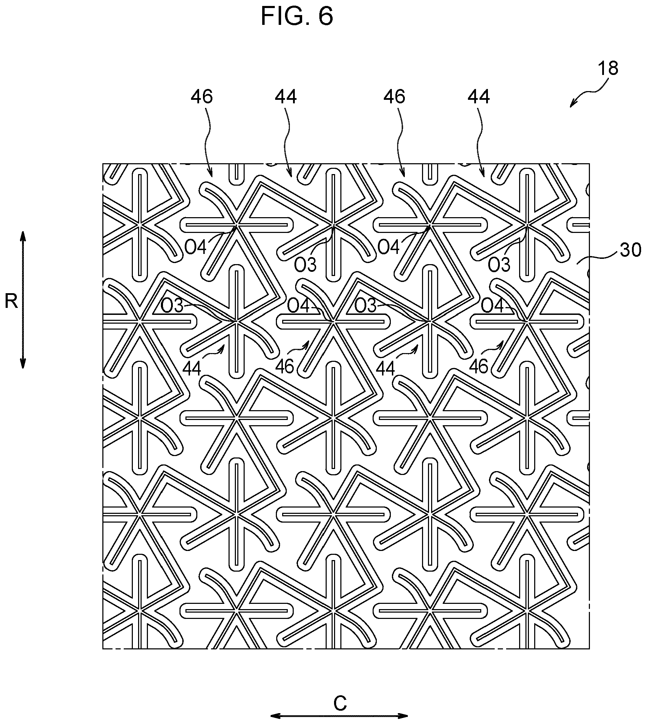

As is shown in FIG. 5 and FIG. 6, the second low-brightness regions 18 have a plurality of first asterisk projections 44 and a plurality of second asterisk projections 46 that each protrude from the base surface 30. The first asterisk projections 44 and the second asterisk projections 46 are arranged alternatingly in both the tire circumferential direction and the tire radial direction. The first asterisk projections 44 and the second asterisk projections 46 are an example of second projections.

### [First Asterisk Projections 44]

The following description concentrates principally on portions of the first asterisk projections 44 that are different from the first asterisk projections 34 of the first low-brightness regions 16 (see FIG. 3).

As is shown in FIG. 5, when viewed from a perpendicular direction relative to the base surface 30, the first asterisk projections 44 are formed having the same shape as the first asterisk projections 34 of the first low-brightness regions 16 (see FIG. 3). Portions of the first asterisk projections 44 that correspond to the first extended portions 35A-1 and 35A-2, the second extended portions 35B-1 and 35B-2, and the third extended portions 35C-1 and 35C-2, and also to the center O1 of the first asterisk projections 34 are referred to as first extended portions 45 A-1 and 45A-2, second extended portions 45B-1 and 45B-2, and third extended portions 45C-1 and 45C-2, and as a center O3. Hereinafter, these six extended portions are grouped together under the description `extended portions 44E'.

As is shown in FIG. 9 B, a cross-section in an orthogonal direction relative to the extension direction of the extended portions 44E of the first asterisk projections 44 is formed substantially in the shape of an isosceles triangle which has a flat apex surface 44C. In other words, the first asterisk projections 44 have the apex surface 44C and a pair of side surfaces 44D. In the present exemplary embodiment, a width (shown as W2 in the drawings) of the apex surface 44C is set at 0.02 mm, and an apex angle (shown as D2 in the drawings) of the first asterisk projections 44 is set at 26 °. Moreover, a height (shown as H2 in the drawings) of the first asterisk projections 44 is set at a predetermined single value of from 0.1 mm to 1.0 mm. In the present exemplary embodiment, this height H2 is set, as an example, to 0.28 mm. In other words, the height (i.e., the protrusion height) of the first asterisk projections 44 is lower than the height of the first asterisk projections 34 of the first low-brightness regions 16.

### [Second Asterisk Projections 46]

As is shown in FIG. 5, the second asterisk projections 46 are formed having the same shape as the first asterisk projections 44. More specifically, when viewed from a perpendicular direction relative to the base surface 30, the configuration of the second asterisk projections 46 is achieved by rotating each first asterisk projection 44 by 90 ° in a clockwise direction around the center O3, and turning the first asterisk protrusion 44 that has been rotated by 90 degrees about the center O3 upside down, as viewed from a direction orthogonal to the base surface 30.

In the second asterisk projections 46, the portions thereof that correspond to the first extended portions 45 A-1 and 45A-2, the second extended portions 45B-1 and 45B-2, and the third extended portions 45C-1 and 45C-2 of the first asterisk projections 44, and also to the center O3 are referred to as first extended portions 47A-1 and 47A-2, second extended portions 47B-1 and 47B-2, and third extended portions 47C-1 and 47C-2, and as a center O4. Hereinafter, these six extended portions are grouped together under the description `extended portions 46E'.

Moreover, a portion of the second asterisk projections 46 that corresponds to the apex surface 44C of the first asterisk projections 44 is referred to as an apex surface 46C. In addition, portions of the second asterisk projections 46 that correspond to the side surfaces 44D of the first asterisk projections 44 are referred to as side surfaces 46D (see FIG. 9 (B)).

Additionally, a height of the second asterisk projections 46 is set at a predetermined single value of from 0.1 mm to 1.0 mm, and in the present exemplary embodiment, is set, as an example, to 0.28 mm. In other words, the height of the first asterisk projections 44 and the height of the second asterisk projections 46 are both set to the same value of 0.28 mm.

### [Additional Structure]

As is shown in FIG. 6, the first asterisk projections 44 and the second asterisk projections 46 are arranged alternatingly in both the tire circumferential direction and the tire radial direction, and fill the entire second low-brightness regions 18 (see FIG. 2). In addition, in the same way as the first asterisk projections 34 and the second asterisk projections 36 of the first low-brightness regions 16, the first asterisk projections 44 and the second asterisk projections 46 are connected together.

Moreover, as is shown in FIG. 5, in first asterisk projections 44 and second asterisk projections 46 which are adjacent to each other in both the tire radial direction and the tire circumferential direction, the pitch (hereinafter, referred to as a pitch P2) between the center O3 and the center O4 is set at a predetermined single value which is larger than 0.1 mm and equal to or less than 3.0 mm. In the present exemplary embodiment, the pitch P2 between the center O3 and the center O4 is set to the same value as the pitch P1 between the center O1 and the center O2 in the first low-brightness regions 16.

In the present exemplary embodiment, the value of the brightness L * of the second low-brightness regions 18 was found to be 6 when measured using the above-described measurement instrument.

### (Third Low-Brightness Regions 20)

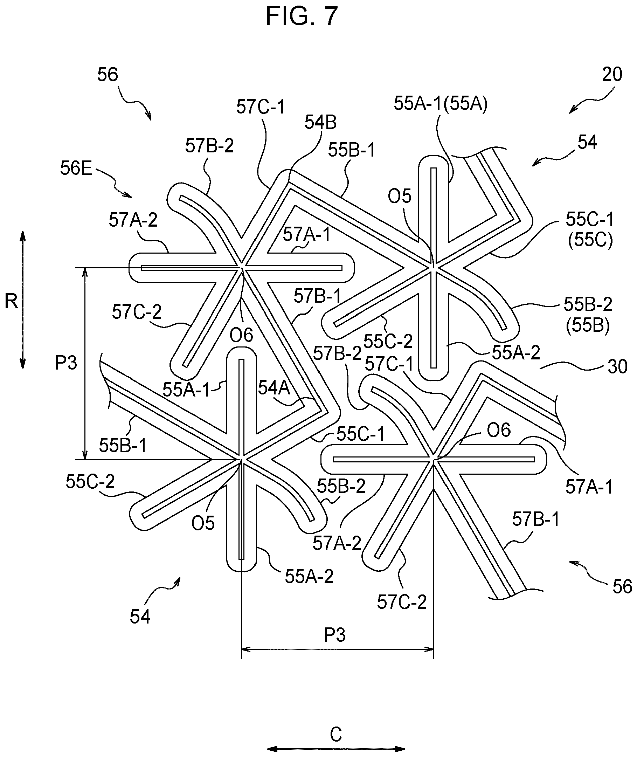

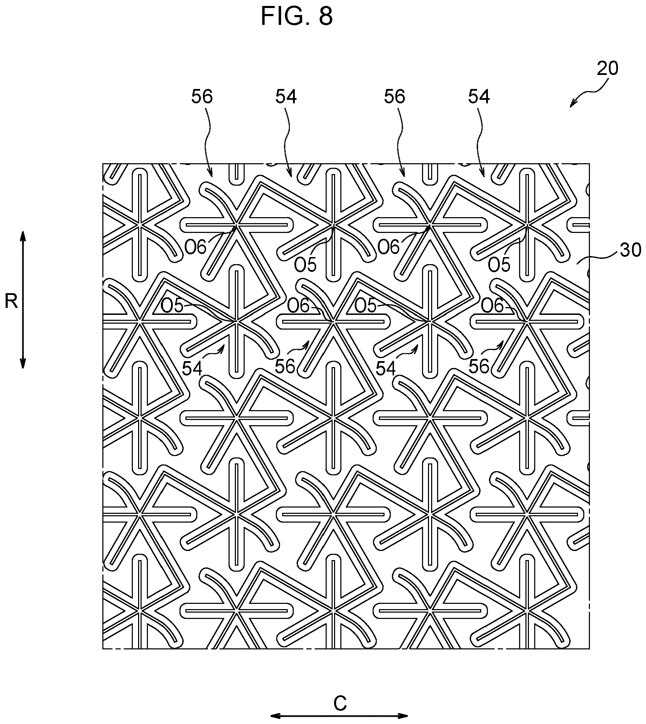

As is shown in FIG. 7 and FIG. 8, the third low-brightness regions 20 have a plurality of first asterisk projections 54 and a plurality of second asterisk projections 56 that each protrude from the base surface 30. The first asterisk projections 54 and the second asterisk projections 56 are arranged alternatingly in both the tire circumferential direction and the tire radial direction. The first asterisk projections 54 and the second asterisk projections 56 are examples of third projections.

### [First Asterisk Projections 54]

The following description concentrates principally on portions of the first asterisk projections 54 that are different from the first asterisk projections 34 of the first low-brightness regions 16 (see FIG. 3).

As is shown in FIG. 7, when viewed from a perpendicular direction relative to the base surface 30, the first asterisk projections 54 are formed having the same shape as the first asterisk projections 34 of the first low-brightness regions 16 (see FIG. 3). In the first asterisk projections 54, the portions thereof that correspond to the first extended portions 35A-1 and 35A-2, the second extended portions 35B-1 and 35B-2, and the third extended portions 35C-1 and 35C-2, and also to the center O1 of the first asterisk projections 34 are referred to as first extended portions 55A-1 and 55A-2, second extended portions 55B-1 and 55B-2, and third extended portions 55C-1 and 55C-2, and as a center O5. Hereinafter, these six extended portions are grouped together under the description `extended portions 54E'.

As is shown in FIG. 9 (C), a cross-section in an orthogonal direction relative to the extension direction of the extended portions 54E of the first asterisk projections 54 is formed substantially in the shape of an isosceles triangle which has a flat apex surface 54C. In other words, the first asterisk projections 54 have the apex surface 54C and a pair of side surfaces 54D. In the present exemplary embodiment, a width (shown as W3 in the drawings) of the apex surface 54C is set at 0.02 mm, and an apex angle (shown as D3 in the drawings) of the first asterisk projections 54 is set at 26 °. Moreover, a height (shown as H3 in the drawings) of the first asterisk projections 54 is set at a predetermined single value of from 0.1 mm to 1.0 mm. In the present exemplary embodiment, this height H3 is set, as an example, to 0.2 mm. In other words, the height of the first asterisk projections 54 is set lower than the height of the first asterisk projections 44 of the second low-brightness regions 18.

### [Second Asterisk Projections 56]

As is shown in FIG. 7, the second asterisk projections 56 are formed having the same shape as the first asterisk projections 54. More specifically, when viewed from a perpendicular direction relative to the base surface 30, the configuration of the second asterisk projections 56 is achieved by rotating each first asterisk projection 54 by 90 ° in a clockwise direction around the center O5, and turning the first asterisk protrusion 54 that has been rotated by 90 degrees about the center O5 upside down, as viewed from a direction orthogonal to the base surface 30.

In the second asterisk projections 56, the portions thereof that correspond to the first extended portions 55A-1 and 55A-2, the second extended portions 55B-1 and 55B-2, and the third extended portions 55C-1 and 55C-2 of the first asterisk projections 54, and also to the center O5 are referred to as first extended portions 57A-1 and 57A-2, second extended portions 57B-1 and 57B-2, and third extended portions 57C-1 and 57C-2, and as a center 06. Hereinafter, these six extended portions are grouped together under the description `extended portions 56E'.

Moreover, a portion of the second asterisk projections 56 that corresponds to the apex surface 54C of the first asterisk projections 54 is referred to as an apex surface 56C. In addition, portions of the second asterisk projections 56 that correspond to the side surfaces 54D of the first asterisk projections 5 are referred to as side surfaces 56D (see FIG. 9 (C)).

Additionally, a height of the second asterisk projections 56 is set at a predetermined single value of from 0.1 mm to 1.0 mm, and in the present exemplary embodiment, is set, as an example, to 0.2 mm. In other words, the height of the first asterisk projections 54 and the height of the second asterisk projections 56 are both set to the same value of 0.2 mm.

### [Additional Structure]

As is shown in FIG. 8, the first asterisk projections 54 and the second asterisk projections 56 are arranged alternatingly in both the tire circumferential direction and the tire radial direction, and fill the entire third low-brightness regions 20 (see FIG. 2). In addition, in the same way as the first asterisk projections 34 and the second asterisk projections 36 of the first low-brightness regions 16, the first asterisk projections 54 and the second asterisk projections 56 are connected together.

Moreover, as is shown in FIG. 7, in first asterisk projections 54 and second asterisk projections 56 which are adjacent to each other in both the tire radial direction and the tire circumferential direction, the pitch (hereinafter, referred to as a pitch P3) between the center O5 and the center O6 is set at a predetermined single value which is larger than 0.1 mm and equal to or less than 3.0 mm. In the present exemplary embodiment, the pitch P3 between the center O5 and the center O6 is set to the same value as the pitch P1 between the center O1 and the center O2 in the first low-brightness regions 16. In other words, the pitch P1 between the first asterisk projections 34 and the second asterisk projections 36 in the first low-brightness regions 16, the pitch P2 between the first asterisk projections 44 and the second asterisk projections 46 in the second low-brightness regions 18, and the pitch P3 between the first asterisk projections 54 and the second asterisk projections 56 in the third low-brightness regions 20 are all set to the same value.

In the present exemplary embodiment, the value of the brightness L * of the third low-brightness regions 20 was found to be 9 when measured using the above-described measurement instrument. Moreover, the value of the brightness L * of the other regions 22 at which no projections were formed was found to be 24 when measured using the above-described measurement instrument.

### (Actions and Effects)

Next, actions and effects of the tire according to the present exemplary embodiment will be described.

In the first low-brightness regions 16 of the decorative trim portions 14 of the tire side portion 12, incident light that strikes the first asterisk projections 34 and the second asterisk projections 36 formed in the first low-brightness regions 16 strikes the side surfaces 34D and 36D shown in FIG. 9 (A). This incident light is attenuated as a result of being repeatedly reflected between the mutually facing side surfaces 34D and 36D, and is then reflected towards the outside.

In the second low-brightness regions 18 which are disposed respectively at both end sides of the first low-brightness regions 16 in the tire circumferential direction, incident light that strikes the first asterisk projections 44 and the second asterisk projections 46 formed in the second low-brightness regions 18 strikes the side surfaces 44D and 46D. This incident light is attenuated as a result of being repeatedly reflected between the mutually facing side surfaces 44D and 46D, and is then reflected towards the outside.

Moreover, in the third low-brightness regions 20 which are disposed respectively at both end sides of the second low-brightness regions 18 in the tire circumferential direction, incident light that strikes the first asterisk projections 54 and the second asterisk projections 56 formed in the third low-brightness regions 20 strikes the side surfaces 54D and 56D. This incident light is attenuated as a result of being repeatedly reflected between the mutually facing side surfaces 54D and 56D, and is then reflected towards the outside.

Furthermore, in the other regions 22 of the tire side portion 12 at which no projections are formed, incident light that strikes the other regions 22 is reflected towards the outside by the outer surface forming part of the other regions 22.

Here, the pitch P1 between the first asterisk projections 34 and the second asterisk projections 36 in the first low-brightness regions 16, the pitch P2 between the first asterisk projections 44 and the second asterisk projections 46 in the second low-brightness regions 18, and the pitch P3 between the first asterisk projections 54 and the second asterisk projections 56 in the third low-brightness regions 20 are all set to the same value. In other words, the density of the projections formed in the first low-brightness regions 16, the density of the projections formed in the second low-brightness regions 18, and the density of the projections formed in the third low-brightness regions 20 are all set to the same value.

Furthermore, the height of the first asterisk projections 34 and the height of the second asterisk projections 36 of the first low-brightness regions 16 are both set to the same value of 0.35 mm. In addition, the height of the first asterisk projections 44 and the height of the second asterisk projections 46 of the second low-brightness regions 18 are both set to the same value of 0.28 mm. Moreover, the height of the first asterisk projections 54 and the height of the second asterisk projections 56 of the third low-brightness regions 20 are both set to the same value of 0.2 mm. In other words, the height of the projections of the first low-brightness regions 16, the height of the projections of the second low-brightness regions 18, and the height of the projections of the third low-brightness regions 20 become progressively lower in this sequence.

Moreover, because the apex angle of each projection is the same, the ratio of the base surface 30 per unit surface area at the first low-brightness regions 16, the ratio of the base surface 30 per unit surface area at the second low-brightness regions 18, and the ratio of the base surface 30 per unit surface area of the third low-brightness regions 20 becomes progressively greater in this sequence.

As a result, the quantity of light reflected towards the outside in the first low-brightness regions 16 is less than the quantity of light reflected towards the outside in the second low-brightness regions 18. Furthermore, the quantity of light reflected towards the outside in the second low-brightness regions 18 is less than the quantity of light reflected towards the outside in the third low-brightness regions 20.

Because of this, the brightness L * in the third low-brightness regions 20, the second low-brightness regions 18, and the first low-brightness regions 16 reduces in this sequence. In other words, the first low-brightness regions 16 appear blacker in color relatively compared to the second low-brightness regions 18, and the second low-brightness regions 18 appear blacker in color relatively compared to the third low-brightness regions 20.

In this way, by changing the height of the projections, compared with when the brightness L * is made the same over the entire decorative trim 14 on which projections are formed, it is possible to increase options (i.e., to increase variation) that is used to show the decorative trim 14 which has regions in which projections are formed.

Moreover, phased changes in brightness (i.e., a gradation effect) can be shown by lowering the brightness of the third low-brightness regions 20, the second low-brightness regions 18, and the first low-brightness regions 16, which are arranged in the device circumferential direction (i.e., an example of one direction), in this sequence.

Each of the extended portions 34E of the first asterisk projections 34 extends in a different direction, and each of the extended portions 36E of the first asterisk projections 36 also extends in a different direction. As a consequence, concentrations of reflected light are inhibited, and even if an observer views the first low-brightness regions 16 while changing the angle at which they are viewing the first low-brightness regions 16, it is possible to inhibit the appearance from varying. Furthermore, it is difficult for each of the first asterisk projections 34 and the second asterisk projections 36 to be bent over, so that the durability of each of the first asterisk projections 34 and the second asterisk projections 36 can be improved. The same actions are demonstrated in both the second low-brightness regions 18 and the third low-brightness regions 20 as well.

Furthermore, the first asterisk projections 34, 44, and 54 are connected respectively to the second asterisk projections 36, 46, and 56 via the connecting portions 34A, 44A, and 54A, and by the connecting portions 34B, 44B, and 54B. As a result, the first asterisk projections 34, 44, and 54 and the second asterisk projections 36, 46, and 56 respectively are able to support each other via the respective connecting portions, so that the first asterisk projections 34, 44, and 54 and the second asterisk projections 36, 46, and 56 are inhibited from being bent over, and the durability thereof can be improved.

### [First Example]

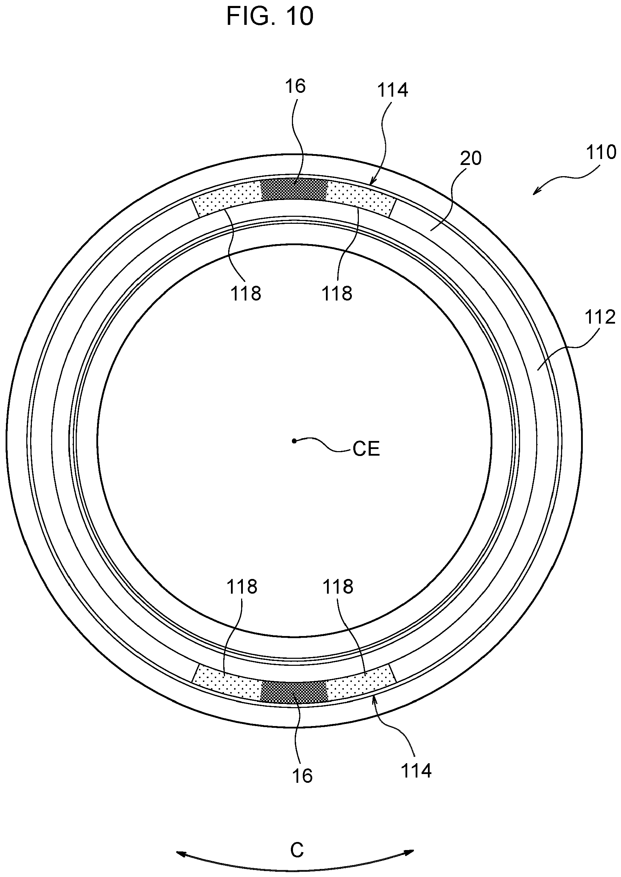

Next, a tire 110 according to a first example, which is not in accordance with the present invention, will be described using FIG. 10 through FIG. 12. The following description concentrates on portions of the tire 110 of the first example that are different from the tire 10 of the first exemplary embodiment.

As is shown in FIG. 10, the first low-brightness regions 16 and second low-brightness regions 118, which have a lower brightness than the other regions 22 and appear as black in color, are formed in the decorative trim portions 114 of the tire 110. In other words, the decorative trim portions 14 are formed by the first low-brightness regions 16 and the second low-brightness regions 118. The first low-brightness regions 16 extend in the tire circumferential direction, while a second low-brightness region 118 is disposed respectively at both end sides in the tire circumferential direction of the first low-brightness regions 16.
The second low-brightness regions 118 are an example of second pattern regions.

### (Second Low-Brightness Regions 118)

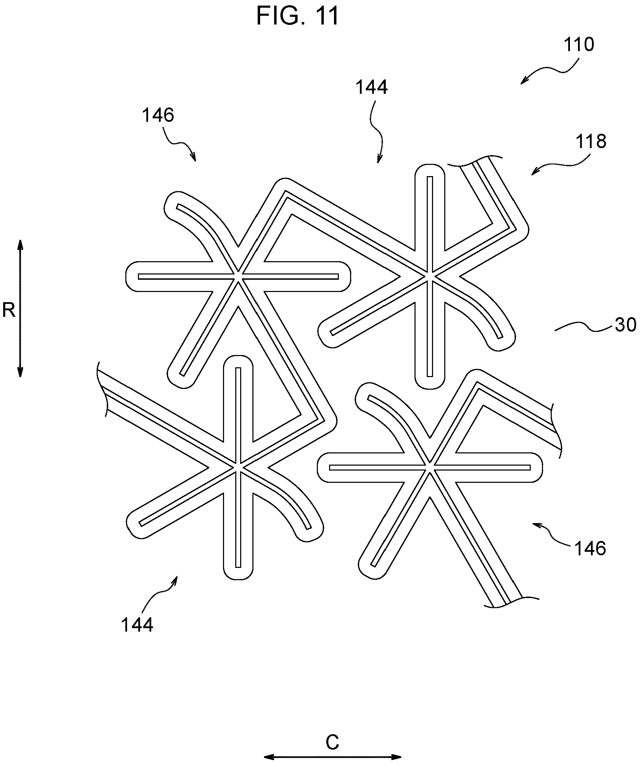

As is shown in FIG. 11, the second low-brightness regions 118 have a plurality of first asterisk projections 144 and a plurality of second asterisk projections 146 that each protrude from the base surface 30. The first asterisk projections 144 and the second asterisk projections 146 are arranged alternatingly in both the tire circumferential direction and the tire radial direction. The first asterisk projections 144 and the second asterisk projections 146 are examples of second projections.

### [First Asterisk Projections 144, Second Asterisk Projections 146]

The following description concentrates principally on portions of the first asterisk projections 144 and the second asterisk projections 146 that are different from the first asterisk projections 34 and the second asterisk projections 36 of the first exemplary embodiment. Heights of the first asterisk projections 144 and the second asterisk projections 146 are set at a predetermined single value of from 0.1 mm to 0.245 mm, and in the present example, are set, as an example, to 0.245 mm.

Here, as is described above, the heights of the first asterisk projections 34 and the second asterisk projections 36 of the first low-brightness regions 16 are 0.35 mm. Namely, the heights of the first asterisk projections 144 and the second asterisk projections 146 of the second low-brightness regions 118 are equal to or less than 70 % of the heights of the first asterisk projections 34 and the second asterisk projections 36 of the first low-brightness regions 16. In other words, the heights of the first asterisk projections 34 and the second asterisk projections 36 of the first low-brightness regions 16 are equal to or more than 143 % of the heights of the first asterisk projections 144 and the second asterisk projections 146 of the second low-brightness regions 118.

### (Actions and Effects)

Next, actions and effects of the tire according to the present example will be described.

As is described above, the height of the first asterisk projections 144 and the height of the second asterisk projections 146 of the second low-brightness regions 118 are equal to or less than 70 % of the height of the first asterisk projections 34 and the height of the second asterisk projections 36 of the first low-brightness regions 16.

Because of this, there is a sizable difference between the quantity of light (i.e., the light intensity) which is irradiated onto the second low-brightness regions 118 and reflected towards the outside and the quantity of light (i.e., the light intensity) which is irradiated onto the first low-brightness regions 16 and reflected towards the outside. As a result, there is a distinct boundary line between the second low-brightness regions 118 and the first low-brightness regions 16, and it is possible to increase the options that is used to show the decorative portions 114 that have a region where projections are formed.

### (Evaluation)

In order to confirm the effects of aspects of the present invention, tires of Examples 1 and 2, to which the present invention was applied, and tires of Comparative Examples 1 and 2 were prepared and evaluated.

### [Evaluation Tires]

Tires having a size of 205/55R16 and a tire cross-sectional height SH of 114 mm were used as test tires for each evaluation.

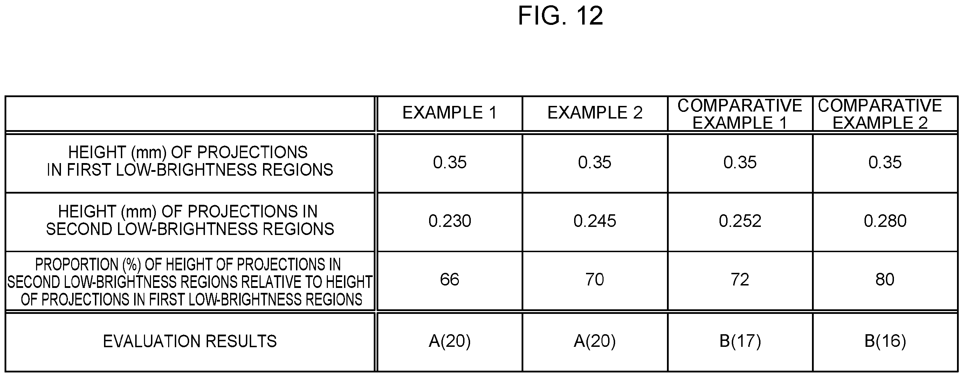

The tires of Examples 1 and 2 and of Comparative Examples 1 and 2 have the same structure as the tires according to the first example. Moreover, the respective heights of the first asterisk projections 34 and the second asterisk projections 36 of the first low-brightness regions 16 vary as in the table shown in FIG. 12. In addition, the respective heights of the first asterisk projections 144 and the second asterisk projections 146 of the second low-brightness regions 118 also vary as in the table shown in FIG. 12. The respective proportions % of the heights of the projections of the second low-brightness regions 118 relative to the heights of the projections of the first low-brightness regions 16 also vary as in the table shown in FIG. 12.

### [Evaluation Method and Evaluation Content]

The respective test tires were mounted on a vehicle, and the test tires were then arranged so that the pair of decorative trim portions 114 were aligned in a vertical direction. Twenty observers then viewed the decorative trim portions of the test tires from multiple directions in outdoor, sunny conditions and consequently made their evaluations.

The content of the evaluation was whether or not it was possible to recognize a boundary line between the first low-brightness regions 16 and the second low-brightness regions 118. If the number of observers whose evaluation stated that they were able to recognize a boundary line was 18 or more, then an 'A' was awarded. If this number was 10~17, then a 'B' was awarded, while if the number was 9 or less, then a 'C' was awarded.

### [Evaluation Results]

As is shown in the table in FIG. 12, the evaluation result was 'A' for the tires of Examples 1 and 2 to which the present invention was applied. In contrast, the evaluation result was 'B' for the tires of Comparative Examples 1 and 2. Note that, in this particular evaluation, an evaluation result of 'C' was not obtained. From these evaluation results it was found that, compared to the tires of Comparative Examples 1 and 2, the boundary line between the first low-brightness regions 16 and the second low-brightness regions 118 was more distinct in the tires of Examples 1 and 2.

### [Second Exemplary Embodiment]

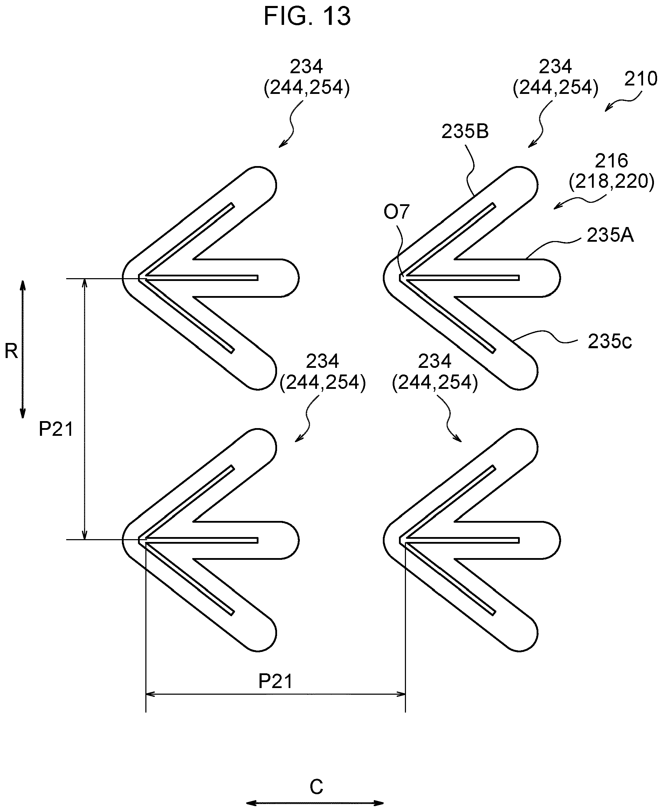

Next, a tire 210 according to a second exemplary embodiment of the present invention will be described using FIG. 13. The following description concentrates on portions of the tire 210 of the second exemplary embodiment that are different from the tire 10 of the first exemplary embodiment.

As is shown in FIG. 13, projections 234 that are formed in first low-brightness regions 216 of the tire 210 have an extended portion 235A that extends towards one side in the tire circumferential direction from a center O7 which is serving as a base point. Furthermore, the projections 234 also have an extended portion 235B that extends towards an outer side in the tire radial direction and toward the one side in the tire circumferential direction from the center 07, and an extended portion 235C extends towards an inner side in the tire radial direction and towards the one side in the tire circumferential direction from the center O7. A pitch P21 between the projections 234 in the tire circumferential direction and in the tire radial direction is set at a predetermined single value of from 0.1 mm to 1.0 mm. Additionally, a height of the projections 234 is set at a predetermined single value of from 0.1 mm to 1.0 mm and, in the present exemplary embodiment, is set, as an example, to 0.35 mm. The first low-brightness regions 216 are an example of first pattern regions, while the projections 234 are an example of first projections.

The following description concentrates principally on portions of the projections 244 which are formed in second low-brightness regions 218 of the tire 210 that are different from the projections 234. A height of the projections 244 is set at a predetermined single value of from 0.1 mm to 1.0 mm, and in the present exemplary embodiment, is set, as an example, to 0.28 mm. The second low-brightness regions 218 are an example of second pattern regions, while the projections 244 are an example of second projections.

Furthermore, the following description concentrates principally on portions of the projections 254 which are formed in third low-brightness regions 220 of the tire 210 that are different from the projections 234. A height of the projections 254 is set at a predetermined single value of from 0.1 mm to 1.0 mm, and in the present exemplary embodiment, is set, as an example, to 0.2 mm. The third low-brightness regions 220 are an example of third pattern regions, while the projections 254 are an example of third projections.

Note that actions in the second exemplary embodiment are the same as the corresponding actions in the first exemplary embodiment excluding the actions generated as a result of the respective projections being connected together.

### [Third Exemplary Embodiment]

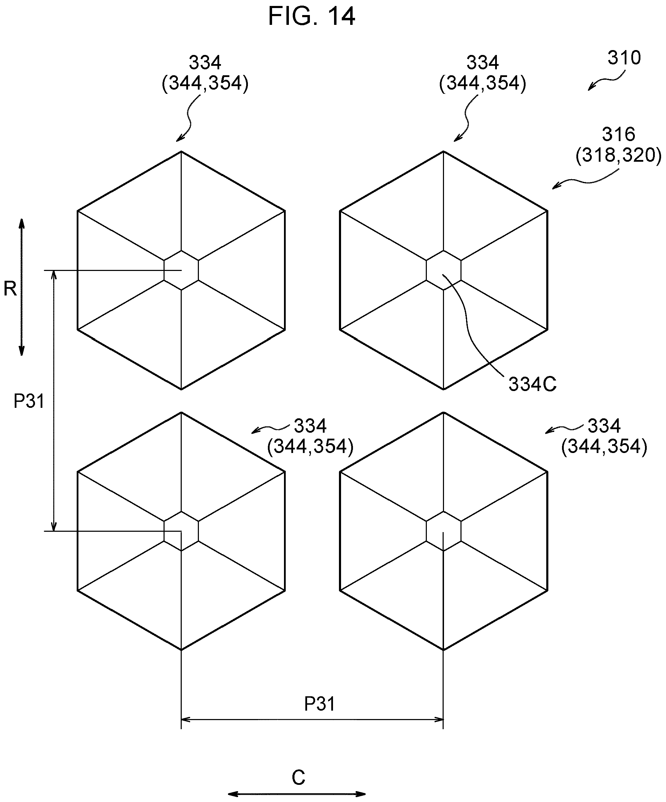

Next, a tire 310 according to a third exemplary embodiment of the present invention will be described using FIG. 14. The following description concentrates on portions of the tire 310 of the third exemplary embodiment that are different from the tire 10 of the first exemplary embodiment.

As is shown in FIG. 14, projections 334 that are formed in first low-brightness regions 316 of the tire 310 are formed as hexagonal truncated pyramids whose bottom surface is formed in a hexagonal shape, and which have an apex surface 334C, which faces in the protrusion direction, formed at a protrusion end of the projections 334. A pitch P31 between the projections 334 in the tire circumferential direction and in the tire radial direction is set at a predetermined single value of from 0.1 mm to 1.0 mm. Additionally, a height of the projections 334 is set at a predetermined single value of from 0.1 mm to 1.0 mm and, in the present exemplary embodiment, is set, as an example, to 0.35 mm. The first low-brightness regions 316 are an example of first pattern regions, while the projections 334 are an example of first projections.

The following description concentrates principally on portions of the projections 344 which are formed in second low-brightness regions 318 of the tire 310 that are different from the projections 334. A height of the projections 344 is set at a predetermined single value of from 0.1 mm to 1.0 mm, and in the present exemplary embodiment, is set, as an example, to 0.28 mm. The second low-brightness regions 318 are an example of second pattern regions, while the projections 344 are an example of second projections.

Furthermore, the following description concentrates principally on portions of the projections 354 which are formed in third low-brightness regions 320 of the tire 310 that are different from the projections 334. A height of the projections 354 is set at a predetermined single value of from 0.1 mm to 1.0 mm, and in the present exemplary embodiment, is set, as an example, to 0.2 mm. The third low-brightness regions 320 are an example of third pattern regions, while the projections 354 are an example of third projections.

Note that actions in the third exemplary embodiment are the same as the corresponding actions in the first exemplary embodiment excluding the actions generated as a result of the respective projections being connected together.

### [Second Example]

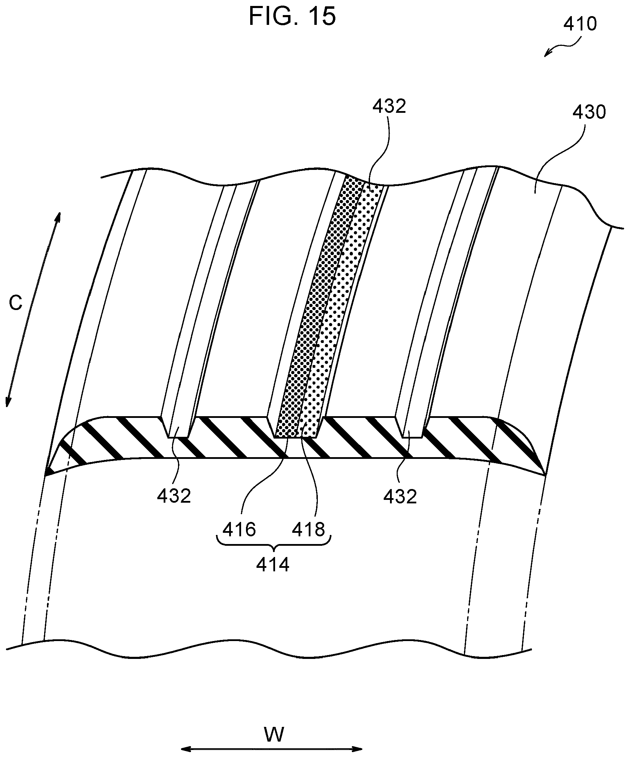

Next, a tire 410 according to a second example, which is not in accordance with the present invention, will be described using FIG. 15. The following description concentrates on portions of the tire 410 of the second example that are different from the tire 110 of the first example.

A decorative trim portion 414 of the tire 410 is formed in a tread 430 on an outer side in the tire radial direction of the tire 410, and has a first low-brightness region 416 and a second low-brightness region 418. More specifically, a plurality of circumferential-direction grooves 432 which extend in the tire circumferential direction are formed at a distance from each other in the tire width direction (shown by an arrow W in the drawing) in the tread 430 of the tire 410. The first low-brightness region 416 and the second low-brightness region 418 are formed in a circumferential groove 432 which is located in the center in the tire width direction, and the first low-brightness region 416 and the second low-brightness region 418 are separated from each other in the tire width direction.

The first asterisk projections 34 and a plurality of the second asterisk projections 36 are formed in the first low-brightness region 416 (see FIG. 3). The first asterisk projections 144 and a plurality of the second asterisk projections 146 are formed in the second low-brightness region 418 (see FIG. 11). The first low-brightness regions 416 are an example of first pattern regions, while the second low-brightness regions 418 are an example of second pattern regions.

Actions in the second example are the same as the corresponding actions in the first example excluding the actions generated as a result of the respective projections being connected together.

Note that specific exemplary embodiments of the present invention have been described above in detail, however, the present invention is not limited to these exemplary embodiments, and it should be obvious to one skilled in the art that various modifications and the like may be made thereto insofar as they do not depart from the scope of the present invention as defined by the appended claims. For example, in the above-described first exemplary embodiment, the apex angles (D1 in FIG. 9) of the first asterisk projections 34, 44, and 54 and of the second asterisk projections 36, 46, and 56 are set to 26 °, however, they may instead be set to another angle. If the apex angle D1 is increased, then the proportion of the reflection light reflected by the side surfaces 34D, 44D, 54D, 36D, 46D, and 56D that returns to the direction from where it was emitted increases, and the brightness L * becomes relatively higher.

Priority is claimed on Japanese Patent Application No. 2017-235509, filed December 7, 2017.

### EXPLANATION OF REFERENCE NUMERALS

10 ... Tire, 14 ... Decorative Trim Portion, 16 ... First Low-Brightness Region (Example of a First Pattern Region), 18 ... Second Low-Brightness Region (Example of a Second Pattern Region), 20 ... Third Low-Brightness Region (Example of a Third Pattern Region), 30 ... Base Surface, 34 ... First Asterisk Projections (Example of First Projections), 34E ... Extended Portions, 36 ... Second Asterisk Projections (Example of First Projections), 36E ... Extended Portions, 44 ... First Asterisk Projections (Example of Second Projections), 44E ... Extended Portions, 46 ... Second Asterisk Projections (Example of Second Projections), 46E ... Extended Portions, 54 ... First Asterisk Projections (Example of Third Projections), 54E... Extended Portions, 56 ... Second Asterisk Projections (Example of Third Projections), 56E ... Extended Portions, 110 ... Tire, 114 ... Decorative Trim Portion, 118 ... Second Low-Brightness Region (Example of a Second Pattern Region), 144 ... First Asterisk Projections (Example of Second Projections), 146 ... Second Asterisk Projections (Example of Second Projections), 210 ... Tire, 216 ... First Low-Brightness Region (Example of a First Pattern Region), 218 ... Second Low-Brightness Region (Example of a Second Pattern Region), 220 ... Third Low-Brightness Region (Example of a Third Pattern Region), 234 ... Projections (Example of First Projections), 235A... Extended Portions, 235B ... Extended Portions, 235C ... Extended Portions, 244 ... Projections (Example of Second Projections), 254 ... Projections (Example of Third Projections), 310 ... Tire, 316 ... First Low-Brightness Region (Example of a First Pattern Region), 318 ... Second Low-Brightness Region (Example of a Second Pattern Region), 320 ... Third Low-Brightness Region (Example of a Third Pattern Region), 334 ... Projections (Example of First Projections), 344 ... Projections (Example of Second Projections), 354 ... Projections (Example of Third Projections), 410 ... Tire, 414 ... Decorative Trim Portion, 416 ... First Low-Brightness Region (Example of a First Pattern Region), 418 ... Second Low-Brightness Region (Example of a Second Pattern Region)

## Claims

1. A tire (10, 210, 310), comprising:
decorative trim portions (14) that are formed at an outer surface of a tire (10) and that have a base surface (30);
a first pattern region (16, 216, 316) in which are formed a plurality of first projections (34, 36, 234, 334), the first projections (34, 36, 234, 334) protruding at a protrusion height that is a predetermined value of from 0.1 to 1.0 mm from the base surface (30) of the decorative trim portion (14), and a pitch between each of the first projections being a predetermined value of from 0.1 mm to 1.0 mm; and
a second pattern region (18, 218, 318) in which are formed a plurality of second projections (44, 46, 244, 344), the second projections (44, 46, 244, 344) protruding at a protrusion height that is a predetermined value of from 0.1 mm to 1.0 mm from the base surface (30) of the decorative trim portion (14), and a pitch between each of the second projections being a predetermined value of from 0.1 mm to 1.0 mm,
wherein the pitch between each of the first projections (34, 36, 234, 334) and the pitch between each of the second projections (44, 46, 244, 344) are the same, while the protrusion height of the first projections (34, 36, 234, 334) and the protrusion height of the second projections (44, 46, 244, 344) are different from each other, **characterized in that**
the tire (10, 210, 310) further comprises a third pattern region (20, 220, 320) that is disposed adjacent to the second pattern region (18, 218, 318), and in which are formed a plurality of third projections (54, 56, 254, 354), the third projections (54, 56, 254, 354) protruding at a protrusion height that is a predetermined value of from 0.1 mm to 1.0 mm from the base surface (30) of the decorative trim portion (14), and a pitch between each of the third projections (54, 56, 254, 354) being a predetermined value of from 0.1 mm to 1.0 mm, **in that**:
the pitch between each of the third projections (54, 56, 254, 354) and the pitch between each of the first projections (34, 36, 234, 334) are the same, **in that**
the protrusion height of the first projections is higher than the protrusion height of the second projections (44, 46, 244, 344), while the protrusion height of the third projections (54, 56, 254, 354) is lower than the protrusion height of the second projections (44, 46, 244, 344), and **in that**
the first pattern region (16, 216, 316), the second pattern region (18, 218, 318), and the third pattern region (20, 220, 320) are arranged in this sequence from one side to another side of the tire (10, 210, 310) in one direction.

2. The tire (10, 210, 310) according to claim 1, wherein, when viewed from an orthogonal direction relative to the base surface (30), the first projections (34, 36, 234) and the second projections (44, 46, 244) are respectively formed so as to include extended portions (34E, 36E, 44E, 46E, 235A, 235B)_that extend in multiple directions from a base point.

3. The tire (10, 210, 310) according to claim 1 or 2, wherein the protrusion height of the second projections (44, 46 244, 344) is 70% or less of the protrusion height of the first projections (34, 36, 234, 344).

## Patentansprüche

1. Reifen (10, 210, 310), der Folgendes umfasst:
dekorative Zierstreifenabschnitte (14), die an einer Außenfläche eines Reifens (10) ausgebildet sind und die eine Grundfläche (30) aufweisen;
einen ersten Musterbereich (16, 216, 316), in dem eine Vielzahl von ersten Vorsprüngen (34, 36, 234, 334) ausgebildet ist, wobei die ersten Vorsprünge (34, 36, 234, 334) mit einer Vorsprungshöhe, die ein vorbestimmter Wert von 0,1 bis 1,0 mm ist, von der Grundfläche (30) des dekorativen Zierstreifenabschnitts (14) vorspringen, und ein Abstand zwischen jedem der ersten Vorsprünge ein vorbestimmter Wert von 0,1 mm bis 1,0 mm ist; und
einen zweiten Musterbereich (18, 218, 318), in dem eine Vielzahl von zweiten Vorsprüngen (44, 46, 244, 344) ausgebildet ist, wobei die zweiten Vorsprünge (44, 46, 244, 344) mit einer Vorsprungshöhe, die ein vorbestimmter Wert von 0,1 mm bis 1,0 mm ist, von der Grundfläche (30) des dekorativen Zierstreifenabschnitts (14) vorspringen, und ein Abstand zwischen jedem der zweiten Vorsprünge ein vorbestimmter Wert von 0,1 mm bis 1,0 mm ist,
wobei der Abstand zwischen jedem der ersten Vorsprünge (34, 36, 234, 334) und der Abstand zwischen jedem der zweiten Vorsprünge (44, 46, 244, 344) die gleichen sind, während sich die Vorsprungshöhe der ersten Vorsprünge (34, 36, 234, 334) und die Vorsprungshöhe der zweiten Vorsprünge (44, 46, 244, 344) voneinander unterscheiden, **dadurch gekennzeichnet, dass**
der Reifen (10, 210, 310) ferner einen dritten Musterbereich (20, 220, 320) umfasst, der angrenzend an den zweiten Musterbereich (18, 218, 318) angeordnet ist, und in dem eine Vielzahl von dritten Vorsprüngen (54, 56, 254, 354) ausgebildet ist, wobei die dritten Vorsprünge (54, 56, 254, 354) mit einer Vorsprungshöhe, die ein vorbestimmter Wert von 0,1 mm bis 1,0 mm ist, von der Grundfläche (30) des dekorativen Zierstreifenabschnitts (14) vorspringen, und ein Abstand zwischen jedem der dritten Vorsprünge (54, 56, 254, 354) ein vorbestimmter Wert von 0,1 mm bis 1,0 mm ist, dadurch, dass:
der Abstand zwischen jedem der dritten Vorsprünge (54, 56, 254, 354) und der Abstand zwischen jedem der ersten Vorsprünge (34, 36, 234, 334) die gleichen sind, dadurch, dass
die Vorsprungshöhe der ersten Vorsprünge höher ist als die Vorsprungshöhe der zweiten Vorsprünge (44, 46, 244, 344), während die Vorsprungshöhe der dritten Vorsprünge (54, 56, 254, 354) niedriger ist als die Vorsprungshöhe der zweiten Vorsprünge (44, 46, 244, 344), und dadurch, dass
der erste Musterbereich (16, 216, 316), der zweite Musterbereich (18, 218, 318) und der dritte Musterbereich (20, 220, 320) in dieser Reihenfolge von einer Seite zu einer anderen Seite des Reifens (10, 210, 310) in einer Richtung angeordnet sind.

2. Reifen (10, 210, 310) nach Anspruch 1, wobei, wenn aus einer senkrechten Richtung im Verhältnis zu der Grundfläche (30) betrachtet, die ersten Vorsprünge (34, 36, 234) und die zweiten Vorsprünge (44, 46, 244) jeweils so ausgebildet sind, dass sie verlängerte Abschnitte (34E, 36E, 44E, 46E, 235A, 235B) einschließen, die sich in mehreren Richtungen von einem Fußpunkt aus erstrecken.

3. Reifen (10, 210, 310) nach Anspruch 1 oder 2, wobei die Vorsprungshöhe der zweiten Vorsprünge (44, 46, 244, 344) 70 % oder weniger von der Vorsprungshöhe der ersten Vorsprünge (34, 36, 234, 344) beträgt.

## Revendications

1. Pneumatique (10, 210, 310), comprenant :
des parties de garniture décoratives (14) qui sont formées au niveau d'une surface externe d'un pneumatique (10) et qui comportent une surface de base (30) ;
une première région à motif (16, 216, 316) dans laquelle sont formées une pluralité de premières saillies (34, 36, 234, 334), les premières saillies (34, 36, 234, 334) faisant saillie à une hauteur de saillie qui est une valeur prédéterminée comprise entre 0,1 et 1,0 mm depuis la surface de base (30) de la partie de garniture décorative (14), et un pas entre chacune des premières saillies étant une valeur prédéterminée comprise entre 0,1 mm et 1,0 mm ; et
une deuxième région à motif (18, 218, 318) dans laquelle sont formées une pluralité de deuxièmes saillies (44, 46, 244, 344), les deuxièmes saillies (44, 46, 244, 344) faisant saillie à une hauteur de saillie qui est une valeur prédéterminée comprise entre 0,1 mm et 1,0 mm depuis la surface de base (30) de la partie de garniture décorative (14), et un pas entre chacune des deuxièmes saillies étant une valeur prédéterminée comprise entre 0,1 mm et 1,0 mm,
dans lequel le pas entre chacune des premières saillies (34, 36, 234, 334) et le pas entre chacune des deuxièmes saillies (44, 46, 244, 344) sont identiques, tandis que la hauteur de saillie des premières saillies (34, 36, 234, 334) et la hauteur de saillie des deuxièmes saillies (44, 46, 244, 344) sont différentes l'une de l'autre, **caractérisé en ce que**
le pneumatique (10, 210, 310) comprend en outre une troisième région à motif (20, 220, 320) qui est disposée de manière adjacente à la deuxième région à motif (18, 218, 318), et dans laquelle sont formées une pluralité de troisièmes saillies (54, 56, 254, 354), les troisièmes saillies (54, 56, 254, 354) faisant saillie à une hauteur de saillie qui est une valeur prédéterminée comprise entre 0,1 mm et 1,0 mm depuis la surface de base (30) de la partie de garniture décorative (14), et un pas entre chacune des troisièmes saillies (54, 56, 254, 354) étant une valeur prédéterminée comprise entre 0,1 mm et 1,0 mm, **en ce que** :
le pas entre chacune des troisièmes saillies (54, 56, 254, 354) et le pas entre chacune des premières saillies (34, 36, 234, 334) sont identiques, **en ce que**
la hauteur de saillie des premières saillies est supérieure à la hauteur de saillie des deuxièmes saillies (44, 46, 244, 344), tandis que la hauteur de saillie des troisièmes saillies (54, 56, 254, 354) est inférieure à la hauteur de saillie des deuxièmes saillies (44, 46, 244, 344), et **en ce que**
la première région à motif (16, 216, 316), la deuxième région à motif (18, 218, 318) et la troisième région à motif (20, 220, 320) sont agencées dans cette séquence d'un côté à un autre côté du pneumatique (10, 210, 310), dans une direction.

2. Pneumatique (10, 210, 310) selon la revendication 1, dans lequel, vues depuis une direction orthogonale par rapport à la surface de base (30), les premières saillies (34, 36, 234) et les deuxièmes saillies (44, 46, 244) sont respectivement formées de manière à inclure des parties étendues (34E, 36E, 44E, 46E, 235A, 235B) qui s'étendent dans de multiples directions à partir d'un point de base.

3. Pneumatique (10, 210, 310) selon la revendication 1 ou 2, dans lequel la hauteur de saillie des deuxièmes saillies (44, 46, 244, 344) représente 70 % ou moins de la hauteur de saillie des premières saillies (34, 36, 234, 344).
